# EUROPEAN PATENT SPECIFICATION

(11) **EP 3 161 199 B1**
(45) Date of publication and mention of the grant of the patent: **03.04.2019**
(21) Application number: 15739528.6
(22) Date of filing: 24.06.2015
(51) Int. Cl.: D04H 3/04, B29C 70/48, B29C 70/54, C08J 5/24, D04H 3/08

(54) **NON-WOVEN FABRICS**
FASERVLIESSTOFFE
TISSUS NON-TISSÉS

(30) Priority: 30.06.2014 AT 504512014
(43) Date of publication of application: 03.05.2017
(73) Proprietor: Hexcel Holding GmbH, 4061 Pasching (AT)
(72) Inventor: MOSER, Johannes, A-4040 Linz (AT); WIELAENDER, Stephanie, 4720 Neumarkt (AT); GARAY, Daniel, A-4061 Pasching (AT)
(74) Representative: Eddowes, Simon
(86) International application number: PCT/EP2015/064299
(87) International publication number: WO 2016/001040

(56) References cited:
- EP-A1- 1 041 192
- EP-A1- 2 711 170
- WO-A1-2013/127460
- GB-A- 1 519 468
- US-A1- 2001 006 866

## Description

The present invention relates to non-woven fabrics in particular to non-woven fabrics that may be used as interlayers in composite materials produced from layers of fibre reinforced resins and especially as layers in composite materials that are used in the production of large and/or complex shaped articles such as for example wind turbine blades, aircraft components such as fuselage components or internal panels.

Fibre reinforced materials are used in the manufacture of a wide range of articles. They may be used as what are known as prepregs which are fibrous materials within a matrix of a curable resin such as thermosetting epoxy resin or a polyester resin provided with a curative. The fibrous materials may be tows of carbon fibre, glass fibre or aramid for example, a tow being a strand made up of a plurality of threads. The prepregs may be laid up and shaped in a mould where they can be cured by the application of heat to produce the desired shaped finished article. Alternatively the articles may be made by placing the fibrous material in a dry state in a mould and infusing with a thermosetting resin and then cured.

The finished articles are typically formed from several layers of the dry fibre reinforcement or prepregs or both. These are stacked in a mould and where necessary infused before curing by heating to produce the finished article. A difficulty arises in that there are differences in thermal expansion between the resin matrix and the fibrous reinforcement material. This can cause waviness and other imperfections in the fibre reinforcement which in turn can lead to a reduction in the mechanical properties of the article and in some instances the need to discard the article. In addition wrinkles and other imperfections affecting fibre alignment can arise during layup of the prepregs or dry fibre reinforcement material. The flow of resin during infusion or cure can also affect fibre alignment. It has therefore been proposed to include pre cured laminates as interlayers in lay ups to improve and maintain the alignment of the fibre reinforced layers and furthermore to reduce the imperfections such as wrinkles in the cured article.

European Patent EP-A-1925436 is concerned with the production of fibre reinforced laminates such as wind turbine blades in which the problem of the formation of wrinkles in the cured article is overcome. In EP-A-1925436 a precured layer of material having a greater stiffness than the layer of the uncured laminate is placed within the stack of the uncured layers prior to curing. The process may be repeated until a stack of the required thickness is obtained. The precured layer is a layer of woven material that has been impregnated with a curable resin and cured. EP-A-2217748 employs a precured structural mat comprising groups of parallel fibre bundles which are stitched together, the mat may comprise layers of the parallel fibre which can be transversely aligned to each other. Although the use of such a mat helps with the alignment of the fibres throughout the stack of materials, it suffers from the disadvantage that it inhibits the flow of resin throughout the stack of materials and is also too bulky for many applications. These difficulties can result in voids in the cured product due to air bubbles therein or can cause wrinkles which as discussed previously can adversely impact the mechanical properties of the finished article.

US2001/0006866 discloses a tow multiaxial non-woven fabric, and method of making the same.
EP 2 711 170 A discloses improvements in or relating to fibre reinforced composites.
EP 1 041 192 A discloses canvasses reinforced with metal members.
GB 1 519 468 discloses non-woven fibrous sheet products.
WO 2013/127460 discloses a fabric for use in composite materials and a method for producing said fabric and a composite material body.

Precured laminate layers are rigid by nature and so do not readily conform to the shapes of highly curved moulds. When they are placed into a curved mould, their inherent stiffness prevents them from correctly conforming to the contours of the mould; instead they slightly push the stack out of the mould creating voids beneath the laminate. Thus a laminate capable of conforming to a mould whilst maintaining fibre alignment in nearby plies is desirable.

The invention therefore provides a fabric that overcomes these problems.

According to the present invention there is provided a fabric, a use, a stack and an article as defined in any one of the accompanying claims.

In an embodiment, the present invention therefore provides a non-woven fabric comprising spaced tows in a weft direction and spaced tows in a warp direction, wherein the weft tows and the warp tows are conjoined, and wherein the fabric comprises a binder for conjoining the tows.

A tow of fibrous material is a small dimensional collection of thin continuous fibres, known as filaments, extending axially along the length of the tow. The tow may comprise several hundred, usually many thousands, or more continuous fibres and the tows typically have a maximum dimension of 6 mm and are preferably less than 4 mm. The tows employed in the present invention may be of any suitable materials, glass fibre, carbon fibre and aramid fibre being preferred.

In a preferred embodiment the weft and warp tows employed in the layers of the non-woven fabric of this invention are spaced apart to provide a grid comprising a non-woven fabric comprising a first layer of spaced apart fibre tows in a weft direction and in contact with a second layer of spaced apart fibre tows in a warp direction wherein the layers are joined together where the weft fibre tows are in contact with the warp fibre tows. The spacing preferably provides a gap of from 1mm to 25 mm, preferentially from 2mm to 15mm, or more preferentially from 5mm to 10mm, between the tows. The spacing of the tows can be used to modify the flow of the infused resin. A large spacing can be used to help move infused resin through the fabric of the present invention to help distribute it throughout the mould. A narrow spacing can be used to retard resin flow thereby redirecting the resin to regions that would otherwise be under-impregnated. The spacings also become filled with the infused resin which surrounds the tows of the fabric, this improves the integration of the fabric into the final cured article.

The weft and warp tows of the non-woven fabric of this invention may be joined in any suitable manner. For example they may be joined together by means of an adhesive such as a thermosetting resin. Alternatively they may be mechanically attached such as by stitching. In another embodiment, adhesive fibres may be included within the tows which can be melted and used to bond the weft and warp tows together typically under pressure. In a preferred process the bonding is achieved by including a yarn such as a polyester yarn which is soluble in the resin used in the composite structure. The yarn binds the warp and weft tows and is then dissolved in the resin which upon curing further bonds the warp and weft tows.

In a preferred embodiment the fabric of the present invention comprises tows impregnated with a cured resin in either the warp or weft direction (but preferably not in both warp and weft direction), the tows in the other direction comprise an uncured resin, a powdered resin or are unimpregnated. This makes the fabric rigid in the direction impregnated with cured resin and flexible in the other direction. This enables the fabric to conform to the profile of a mould surface whilst still providing sufficient rigidity to prevent wrinkle formation.

The present invention is particularly suited for use in a mould for a wind turbine blade, these moulds have a more gentle contour along the length-wise direction than in the width-wise direction. Thus the flexible axis of the fabric of the present direction can be aligned in the width-wise direction of the mould allowing it to conform to the tight width-wise contours whilst still preventing wrinkle formation in the length-wise direction.

In an alternative embodiment of the present invention, the fabric comprises cured resin at the point of intersection of the warp and weft tows. The cured resin may be used to join together the warp and weft tows. The cured resin at the points of intersection can provide sufficient rigidity to maintain fibre alignment in nearby fibre layers whilst also permitting flexing in both the warp and weft directions. The flex in two axes allows the fabric to conform to moulds which significant variation across two axes. Away from the point of intersection the warp and/or weft tows may comprise uncured resin or be resin free. One method of forming a fabric according to this embodiment is to provide a resin comprising a reactive epoxy resin on the warp tows, and a reactive hardener rich resin on the weft tows, or vice-versa. When the tows are brought into contact, the hardener will initiate cure of the resin at the point of intersection only, bonding the tows together with cured resin.

In a further embodiment the invention provides the use of the non-woven fabric of this invention as an interlayer in a stack of curable fibre reinforced resin layers to improve the alignment and retention of the alignment of the fibre reinforced resin layers within the stack. Additionally this use of the non-woven fabric reduces wrinkles in the final cured product. The fibre reinforced resin layers may be prepregs or they may be formed by providing the fibrous material dry and providing the resin as a matrix for the fibrous material by impregnation within the mould. In this instance the use of the preferred grid like non-woven interlayer of this invention is particularly advantageous as it both maintains the alignment of the fibrous reinforcement within the curable layers but it allows the flow of the resin through the stack in order to get good distribution of the resin throughout the stack.

The warp and weft tows of the non-woven fabric of the present invention may be the same or different and may be of any suitable material. Preferred materials include glass fibre, carbon fibre and aramid fibre as well as synthetic fibres such as polyester fibre. Tows of glass fibre or carbon fibre are particularly preferred. The tows are made up of many parallel fibres or filaments and each tow may comprise as many as 20,000, preferably as many as 50,000, fibres or filaments. We prefer that the same filaments are used for the warp and the weft tows and that the tows are of a size from 0.5 mm to 5 mm.

The non-woven fabric of this invention may be produced in any convenient way. The warp and/or the weft tows can be coated with an adhesive so that when they contact each other they bond. In such a preferred system the adhesive is a thermosetting resin such as a resin containing a curative epoxy resin or a polyester resin. In this way once the weft and warp tows are brought into contact with each other they can be bonded to each other by heating to cure the thermosetting adhesive. Alternatively although not preferred the warp and weft tows can be brought into contact with each other and then the adhesive is applied. It is however important that the adhesive is cured before the non-woven fabric is used as an interlayer in stacks for the formation of composite materials as otherwise it will lack the stiffness necessary to maintain fibre alignment in the other layers within the stack.

The tows in the non-woven fabric of this invention comprise fibres or filaments, such as carbon fibres, glass fibres, aramid fibres, natural fibres, such as cellulose-based fibre like wood fibres, organic fibres or other fibres, which may be used for reinforcement purposes. Glass and carbon fibres are preferred carbon fibre, being preferred particularly in the manufacture of wind turbine shells of length above 40 metres such as from 50 to 60 metres. The tows are made up of a multiplicity of individual fibres and are unidirectional. Typically the tows will have a circular or almost circular cross-section with a diameter in the range of from 3 to 20 µm, preferably from 5 to 12 µm. Different fibres may be used in different prepregs used to produce a cured laminate.

Exemplary tows are HexTow® carbon fibres, which are available from Hexcel Corporation. Suitable HexTow® carbon fibres include: IM7 carbon fibres, which are available as fibres that contain 6,000 or 12,000 filaments and weight 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m. Other useful materials include Panex 35 or Mitsubishi TRH50.

The present invention is particularly useful is the production of wind turbine blades. As wind turbine blades increase in size, their manufacture requires stacks of multiple layers of composite fibre and resin reinforcement. Conventionally, resin preimpregnated fibrous reinforcement (prepreg) is laid up in a mould to form these stacks. Alternatively, dry fibre layers are laid up in a mould and these are subsequently infused with a curable resin matrix using a vacuum assisted resin transfer moulding process (VARTM).

It is known in the art that bent fibres, linear distortion, wrinkles, or humps of fibres in a fibre-reinforced composite material greatly degrade the mechanical properties, particularly the strength and E-modulus, of a composite. Manufacturing of composites with highly aligned fibres is therefore very desirable. Particularly in VARTM lay-ups containing dry fibre layers, maintaining fibre alignment during both lay-up and processing is a problem.

The non-woven fabric of the present invention have been found to be useful interlayers to obviate or at least mitigate this problem and/or to provide advantages generally use of the non-woven fabric as an interlayer enables fibre alignment to be maintained in the lay-up or stack and linear distortion of the fibres is prevented. Laminate parts may be formed from any combination of one or more layers of prepreg, dry fibrous material, and fibre reinforced sheet material and a non-woven fabric of the present invention.

Where a resin material is used as the adhesive to bond the warp and weft tows of the non-woven fabric of this invention an epoxy resin is preferred. A thermosetting resin, such as an epoxy-based, a vinyl ester-based resin, a polyurethane-based or another suitable thermosetting resin are also suitable for use with the present invention as the adhesive, uncured or cured resin. The cured fibre-reinforced sheet material may comprise more than one type of resin and more than one type of fibres. In a preferred embodiment, the cured fibre- reinforced sheet material comprises unidirectional carbon and/or glass fibres and an epoxy-based resin, polyurethane based resin or a vinyl ester-based resin, preferably the cured fibre-reinforced sheet material consist substantially of unidirectional carbon and/or glass fibres and an epoxy-based resin.

The reactivity of an epoxy resin is indicated by its epoxy equivalent weight (EEW) the lower the EEW the higher the reactivity. The epoxy equivalent weight can be calculated as follows: (Molecular weight epoxy resin)/ (Number of epoxy groups per molecule). Another way is to calculate with epoxy number that can be defined as follows: Epoxy number = 100 / epoxy eq.weight. To calculate epoxy groups per molecule : (Epoxy number x mol.weight) / 100. To calculate mol.weight : (100 x epoxy groups per molecule) / epoxy number. To calculate mol.weight: epoxy eq.weight x epoxy groups per molecule.

The epoxy resin when used in this invention preferably has a reactivity as indicated by an EEW in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para- aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m- xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The cured non-woven fabric of this invention is a relatively flat member typically having a length, which is at least ten times the width, and a width, which is at least 5 times the thickness of the sheet material. Typically, the length is 20 - 50 times the width or more and the width is 20 to 100 times the thickness or more. In a preferred embodiment, the shape of the sheet material is band-like.

It is preferred that the cured non-woven fabric of this invention is dimensioned such that it is coilable. By coilable is meant that the fabric may be coiled onto a roll having a diameter that allows for transportation in standard size containers. This greatly reduces the manufacturing cost of the composite member, as endless coils of the fabric may be manufactured at a centralised facility and shipped to the blade assembly site, where it may be divided into elements of suitable size. To further enhance shipping, it is preferred that the thickness of the non-woven fabric is chosen so that the cured fibre-reinforced sheet material may be coiled onto a roll with a diameter of less than 2 m based on the flexibility, stiffness, fibre type and fibre content utilised. Typically, this corresponds to a thickness up to 3.0 mm, however, for high fibre contents and stiffness, a thickness below 2.5 mm is usually more suitable On the other hand, the thick sheet materials provide for rather large steps at the outer surface, which favours the thinner sheet materials. However, the sheet materials should typically not be thinner than 0.5 mm because they would lack the stiffness necessary to prevent wrinkle formation, otherwise they would necessitate the use of multiple sheets to obtain the required stiffness, which increases manufacturing time. In a preferred embodiment, the thickness of the cured fibre-reinforced sheet material is about 1.5 to 2 mm.

The width of the non-woven fabric can vary along its length. Typically, the maximum width should be more than about 100 mm and to reduce the number of sheets, a width of more than about 150 mm is desirable. Experimental work has shown that in many cases, the width may preferably be more than about 200 mm at the widest place. On the other hand, the resin must travel between adjacent sheets over a distance corresponding to the width of the sheet and hence the maximum width of the sheet material is preferably less than about 500 mm. This also allows for suitable control of resin introduction. In a preferred embodiment, the maximum width is less than about 400 mm and for example if the resin is selected so that it initiates curing prior to complete infusion, it is preferred that the maximum sheet width is less than about 300 mm.

The non-woven fabrics of this invention are particularly useful as interlayers in stacks of layers of fibres in a thermosetting resin matrix. The layers of fibres in the thermosetting resin may be a prepreg or they may be dry fibres that are subsequently infused with a thermosetting resin matrix. Prepreg is the term used to describe fibres and fabric impregnated or in combination with a resin in the uncured state and ready for curing. The fibres may be in the form of tows or fabrics and a tow generally comprises a plurality of thin fibres called filaments. The fibrous materials and resins employed in the prepregs will depend upon the properties required of the cured fibre reinforced material and also the use to which the cured laminate is to be put. The fibrous material is described herein as structural fibre. The resin may be combined with fibres or fabric in various ways. The resin may be tacked to the surface of the fibrous material. The resin may partially or completely impregnate the fibrous material. The resin may impregnate the fibrous material so as to provide a pathway to facilitate the removal of air or gas during processing of the prepreg material.

One preferred family of resins for use in such applications are curable epoxy resins and curing agents. Curing agent accelerators are usually included in the resin to shorten the cure cycle time

The cure cycles employed for curing prepregs and stacks of prepregs are a balance of temperature and time taking into account the reactivity of the resin and the amount of resin and fibre employed. The same applies to the resin infusion of dry fibrous layers.

From an economic point of view it is desirable that the cycle time be as short as possible and so curing agents and accelerators are usually included in the epoxy resin. As well as requiring heat to initiate curing of the resin the curing reaction itself can be highly exothermic and this needs to be taken into account in the time/temperature curing cycle in particular for the curing of large and thick stacks of prepregs as is increasingly the case with the production of laminates for industrial application where large amounts of epoxy resin are employed and high temperatures can be generated within the stack due to the exotherm of the resin curing reaction. Excessive temperatures are to be avoided as they can damage the mould reinforcement or cause some decomposition of the resin. Excessive temperatures can also cause loss of control over the cure of the resin leading to run away cure. The heat generated can also cause differential thermal expansion of the materials resulting in blemishes and faults in the finished cured article and the use of the non-woven fabrics of this invention has been found to reduce or eliminate this occurrence.

Generation of excessive temperatures can be a greater problem when thick sections comprising many layers of prepreg are to be cured as is becoming more prevalent in the production of fibre reinforced laminates for heavy industrial use such as in the production of wind turbine structures particularly wind turbine spars and shells from which the blades are assembled. In order to compensate for the heat generated during curing it has been necessary to employ a dwell time during the curing cycle in which the moulding is held at a constant temperature for a period of time to control the temperature of the moulding and is cooled to prevent overheating this increases cycle time to undesirably long cycle times of several hours in some instances more than eight hours.

For example a thick stack of epoxy based prepregs such as 60 or more layers can require cure temperatures above 100°C for several hours, the same also applies for infusion resins.

However, the cure can have a reaction enthalpy of 150 joules per gram of epoxy resin or more and this reaction enthalpy brings the need for a dwell time during the cure cycle at below 100°C to avoid overheating and decomposition of the resin. Furthermore, following the dwell time it is necessary to heat the stack further to above 100°C (for example to above 125°°C) to complete the cure of the resin. This leads to undesirably long and uneconomic cure cycles. In addition, the high temperatures generated can cause damage to the mould or bag materials or require the use of special and costly materials for the moulds or bags.

There is also a desire to produce laminar structures from prepregs in which the cured resin has a high glass transition temperatures (Tg) such as above 80°C to extend the usefulness of the structures by improving their resistance to exposure at high temperatures and/or high humidity for extended periods of time which can cause an undesirable lowering of the Tg. For wind energy structures a Tg above 90°C is preferred. Increase in the Tg may be achieved by using a more reactive resin. However the higher the reactivity of the resin the greater the heat released during curing of the resin in the presence of hardeners and accelerators which increases the attendant problems as previously described.

The prepregs typically comprise a mixture of a fibrous reinforcement and an epoxy resin containing from 20% to 85% by weight of an epoxy resin of EEW from 150 to 1500 said resin being curable by an externally applied temperature in the range of 70°C to 110°C.

We have found that such desirable prepregs and stacks of prepregs may be obtained using conventionally available epoxy resins if the epoxy resin is cured in the absence of a traditional hardener such as dicyandiamide and in particular we have found that these desirable prepregs can be obtained by use of a urea based curing agent in the absence of a hardener such as dicyandiamide. The relative amount of the curing agent and the epoxy resin that should be used will depend upon the reactivity of the resin and the nature and quantity of the fibre reinforcement in the prepreg. Typically from 0.5 to 10 wt % of the urea based curing agent based on the weight of epoxy resin is used.

The epoxy resin used as the matrix in the fibre reinforced composite previously described as being useful as the adhesive for the warp and weft tows of the non-woven fabric of this invention may be selected from the same resins and in a preferred embodiment the same resin system is used in both the non-woven fabric and as the matrix.

The epoxy resin composition also comprises one or more urea based curing agents and it is preferred to use from 0.5 to 10 wt % based on the weight of the epoxy resin of a curing agent, more preferably 1 to 8 wt %, more preferably 2 to 8 wt %, more preferably 0.5 to 5 wt %, more preferably 0.5 to 4 wt % inclusive, or most preferably 1.3 to 4 wt % inclusive.

The prepregs are typically used at a different location from where they are manufactured and they therefore require handleability. It is therefore preferred that they are dry or as dry as possible and have low surface tack. It is therefore preferred to use high viscosity resins. This also has the benefit that the impregnation of the fibrous layer is slow allowing air to escape and to minimise void formation.

When used the urea curing agent may comprise a bis urea curing agent, such as 2,4 toluene bis dimethyl urea or 2,6 toluene bis dimethyl urea and/or combinations of the aforesaid curing agents. Urea based curing agents may also be referred to as "urones".

Preferred urea based materials are the range of materials available under the commercial name DYHARD® the trademark of Alzchem, urea derivatives, which include bis ureas such as UR500 and UR505.

The prepreg may comprise a resin system comprising an epoxy resin containing from 20% to 85% by weight of an epoxy of EEW from 150 to1500, and 0.5 to 10 wt % of a curing agent, the resin system comprising an onset temperature in the range of from 115 to 125 °C, and/or a peak temperature in the range of from 140 to 150 °C, and/or an enthalpy in the range of from 80 to 120 J/g (Tonset, Tpeak, Enthalpy measured by DSC (=differential scanning calorimetry) in accordance with ISO 11357, over temperatures of from -40 to 270 °C at 10 °C/min). Tonset is defined as the onset-temperature at which curing of the resin occurs during the DSC scan, whilst Tpeak is defined as the peak temperature during curing of the resin during the scan.

The resin system is particularly suitable for prepreg applications at which a desired cure temperature is below 100°C. The resin system may be processed to cure over a wide processing temperature range, ranging from 75°C up to 120°C. Due to its low exothermic properties this resin can be used for large industrial components, suitable for the cure of thin and thick sections. It demonstrates a good static and dynamic mechanical performance following cure temperatures <100°C.

The structural fibres employed in lay-up both in the prepregs and as dry fibre reinforcement may be in the form of random, knitted, woven, non-woven, multi-axial or any other suitable pattern. For structural applications, it is generally preferred that the fibres be unidirectional in orientation. When unidirectional fibre layers are used, the orientation of the fibre can vary throughout the prepreg stack. However, this is only one of many possible orientations for stacks of unidirectional fibre layers. For example, unidirectional fibres in neighbouring layers may be arranged orthogonal to each other in a so-called 0/90 arrangement, which signifies the angles between neighbouring fibre layers. Other arrangements, such as 0/+45/-45/90 are of course possible, among many other arrangements.

The structural fibres may comprise cracked (i.e. stretch-broken), selectively discontinuous or continuous fibres. The structural fibres may be made from a wide variety of materials, such as carbon, graphite, glass, metalized polymers, aramid and mixtures thereof. Glass and carbon fibres are preferred carbon fibre, being preferred for wind turbine shells of length above 40 metres such as from 50 to 60 metres. The structural fibres, may be individual tows made up of a multiplicity of individual fibres and they may be woven or non-woven fabrics. The fibres may be unidirectional, bidirectional or multidirectional according to the properties required in the final laminate. Typically the fibres will have a circular or almost circular cross-section with a diameter in the range of from 3 to 20 µm, preferably from 5 to 12 µm. Different fibres may be used in different prepregs used to produce a cured laminate.

Exemplary layers of unidirectional structural fibres used in the prepregs or dry lay ups may be selected from the same tows as can be used in the non-woven fabric of this invention. For example they may be HexTow® carbon fibres, which are available from Hexcel Corporation. Suitable HexTow® carbon fibres for use in making unidirectional fibre layers include: IM7 carbon fibres, which are available as fibres that contain 6,000 or 12,000 filaments and weight 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

The structural fibres of the prepregs will be substantially impregnated with the epoxy resin and prepregs with a resin content of from 20 to 85 wt % of the total prepreg weight are preferred.

The stacks of prepregs and dry fibre layers of this invention may contain more than 40 layers, typically more than 60 layers and at times more than 80 layers. Typically the stack will have a thickness of from 35 to 100mm. It is preferred to use one interlayer comprising a non-woven fabric of this invention for every 6 to 20 layers of fibre reinforced material preferably one layer for every 10 to 15 layers of fibre reinforced material.

In the production of cured finished articles employing the non-woven fabric of this invention the materials are laid up in a mould in a desired sequence. The material may comprise combinations of one or more layers of prepreg, dry reinforcement and/or reinforced sheet materials together with one or more layers of the non-woven fabric of this invention.

Curing at a pressure close to atmospheric pressure can be achieved by the so-called vacuum bag technique. This involves placing the lay up stack in an air-tight bag and creating a vacuum on the inside of the bag. The bag may be placed in or over a mould prior to or after creating the vacuum. Alternatively stacks may be infused an cured in a closed mould.

Where the dry fibre layers are used the infusion resin may be supplied via suitable conduits. The infusion resin or second infusion resin is drawn through the dry fibres by the reduced pressure inside the bag.

The stack may therefore contain a matrix resin inside the prepreg or a second infusion resin with lay up of dry fibre or both. Whatever resin is present it is then cured by externally applied heat to produce the moulded laminate or part. The use of the vacuum bag has the effect that the stack experiences a consolidation pressure of up to atmospheric pressure, depending on the degree of vacuum applied. The presence of one or more interlayer of non-woven fabric of this invention helps to preserve the desired alignment of the prepreg or infusion layers within the stack.

Upon curing, the stack becomes a composite laminate, suitable for use in a structural application, such as for example an automotive, marine vehicle or an aerospace structure or a wind turbine structure such as a shell for a blade or a spar. Such composite laminates can comprise structural fibres at a level of from 80% to 15% by volume, preferably from 58% to 65% by volume.

The invention has applicability in the production of a wide variety of materials. One particular use is in the production of wind turbine blades. Typical wind turbine blades comprise two long shells which come together to form the outer surface of the blade and a supporting spar within the blade and which extends at least partially along the length of the blade. The shells and the spar may be produced by curing the prepreg/dry fibre stacks containing the non-woven fabric of this invention.

The length and shape of the shells vary but the trend is to use longer blades (requiring longer shells) which in turn can require thicker shells and a special sequence of materials within the stack to be cured. This imposes special requirements on the materials from which they are prepared. Carbon fibre based prepregs are preferred for blades of length 30 metres or more particularly those of length 40 metres or more such as 45 to 65 metres whilst the dry fibre is preferably a glass fibre. The length and shape of the shells may also lead to the use of different prepregs/ dry fibre materials within the stack from which the shells are produced and may also lead to the use of different prepregs/ dry fibre combinations along the length of the shell.

During vacuum assisted processing and curing, it may be very difficult to introduce resin between sheets of dry fibre material if the sheets are positioned very close. This is particularly the case if the space between the sheets is also subjected to vacuum.

In a preferred embodiment of the invention, the prepreg and/or the cured fibre-reinforced sheet material is provided with a surface texture to facilitate introduction of resin between adjacent elements of prepreg and/or cured fibre-reinforced sheet material. The surface texture may comprise resin protrusions of a height above a main surface of the cured fibre-reinforced sheet material, preferably in the order of about 0.1 mm to 0.5 mm, preferably from 0.5 to 3 mm, but larger protrusions may in some cases, such as when the resin introduction distance is relatively large, be larger. The resin protrusions may be uncured, cured or partially cured.

The surface texture may in addition to this or as an alternative comprise recesses, such as channels into the main surface of the cured fibre-reinforced sheet material, preferably the recesses are in the order of 0.1 mm to 0.5 mm below the main surface, but in some cases larger recesses may be suitable. Typically, the protrusions and/or recesses are separated by 1 cm to 2 cm and/or by 0.5 to 4 cm, but the spacing may be wider or smaller dependent on the actual size of the corresponding protrusions and/or recesses.

Surface texture of the types described above may be provided after the manufacturing of the cured fibre-reinforced sheet material, e.g. by sand blasting, grinding or dripping of semi-solid resin onto the surface, but it is preferred that the surface texture to facilitate introduction of resin between adjacent elements of cured fibre-reinforced sheet material at least partially is provided during manufacturing of the cured fibre- reinforced sheet material. This is particularly easily made when the cured fibre- reinforced sheet material is manufactured by belt pressing, as the surface texture may be derived via a negative template on or surface texture of the belt of the belt press. In another embodiment, a foil is provided between the belt and the fibre-reinforced sheet material is formed in the belt press. Such a foil may also act as a liner and should be removed prior to introduction of the cured fibre- reinforced sheet material in the mould.

In a preferred embodiment, the facilitating effect of surface texture on the resin distribution during resin introduction is realised by providing a plurality of inner spacer elements between adjacent elements of the cured fibre-reinforced sheet material. The inner spacer elements may advantageously be selected from one or more members of the group consisting of a collection of fibres, such as glass fibres and/or carbon fibres, a solid material, such as sand particles, and a high melting point polymer, e.g. as dots or lines of resin. It is preferred that the inner spacer elements are inert during the resin introduction, and for example does not change shape or react with the introduced resin. Using inner spacer elements may be advantageous in many cases, as it does not require any particular method of manufacturing of the cured fibre-reinforced sheet material or a special pre-treatment of the cured fibre-reinforced sheet material. The inner spacing elements are preferably in the size range of 0.1 mm to 0.5 mm and separated by typically 1 cm to 2 cm, but both the sizes and the spaces may be suitable in some cases. Typically, the larger the inner spacing element, the larger the spacing can be allowed.

Alternatively, one or more suitable spacers may be used to space the dry fibre material layers. A suitable space may comprise silicon paper. This may layer be removed following processing and curing of the stack.

Wind turbine blades may advantageously be manufactured by connecting two wind turbine blade shells by adhesive and/or mechanical means, such as by fasteners. Both the wind turbine blade shell and the combined wind turbine blade may optionally comprise further elements, such as controlling elements, lightning conductors, etc. In a particularly preferred embodiment, each blade shell consists of a composite member according to the invention. In another preferred embodiment, the wind turbine blade shell member forms substantially the complete outer shell of a wind turbine blade, i.e. a pressure side and a suction side which are formed integrally during manufacturing of the wind turbine blade shell member.

One aspect of the invention concerns a wind turbine blade comprising prepreg, resin infused dry fibre material and cured non-woven fabric of this invention. The wind turbine blade may have a length of at least 40 m. The ratio of thickness, t, to chord, C, (t / C) is substantially constant for airfoil sections in the range between 75% < r / R < 95%, where r is the distance from the blade root and R is the total length of the blade. Preferably the constant thickness to chord is realised in the range of 70% < r / R < 95%, and more preferably for the range of 66% < r / R < 95%.

The present invention is illustrated by reference to the accompanying figures in which:
Figure 1 shows a non-woven fabric according to an embodiment of the invention;
Figure 2 shows a non-woven fabric according to another embodiment of the invention, and;
Figure 3 shows a non-woven fabric according to a further embodiment of the invention.

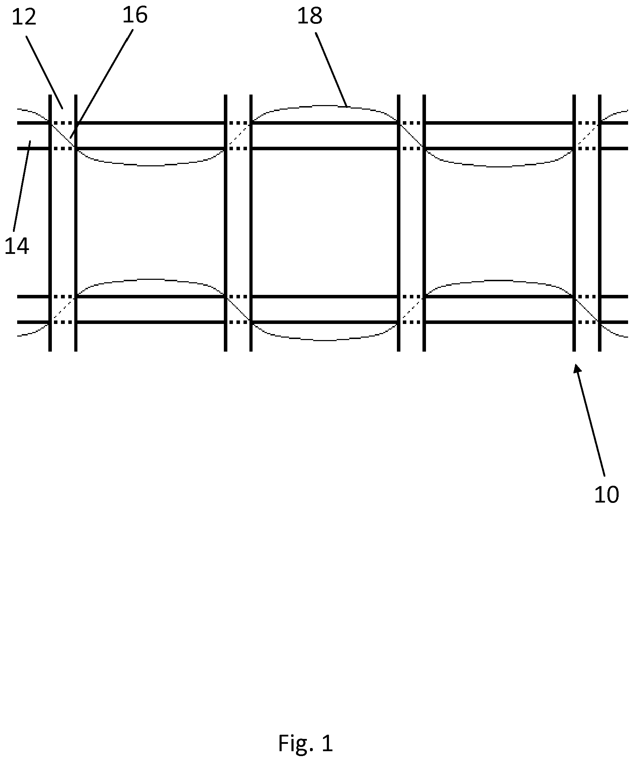

In Figure 1, the non-woven fabric 10 is formed from spaced tows in a weft direction 12 and spaced tows in a warp direction 14, wherein the weft tows and the warp tows are conjoined in the locations 16 in which the tows 12,14 are in contact with one another. The tows 12, 14 are conjoined by means of a binder in the form of a resin 18.

The binder resin is preferably in the form of a binder resin which is soluble in a reinforcement resin. Preferably, the binder resin is polyethersulfone (PES) and the reinforcement resin is an epoxy resin. The binder resin is preferably in the form of a yarn as shown in Figure 1.

In use, the fabric 10 is impregnated with a hot melt reinforcement resin which may be applied by a hot dip or resin bath. The binder resin dissolves into the reinforcement resin and the fabric is ready for use in lay-ups containing dry reinforcement or layers of prepreg reinforcement to prevent any imperfections from perpetuating themselves throughout a lay-up.

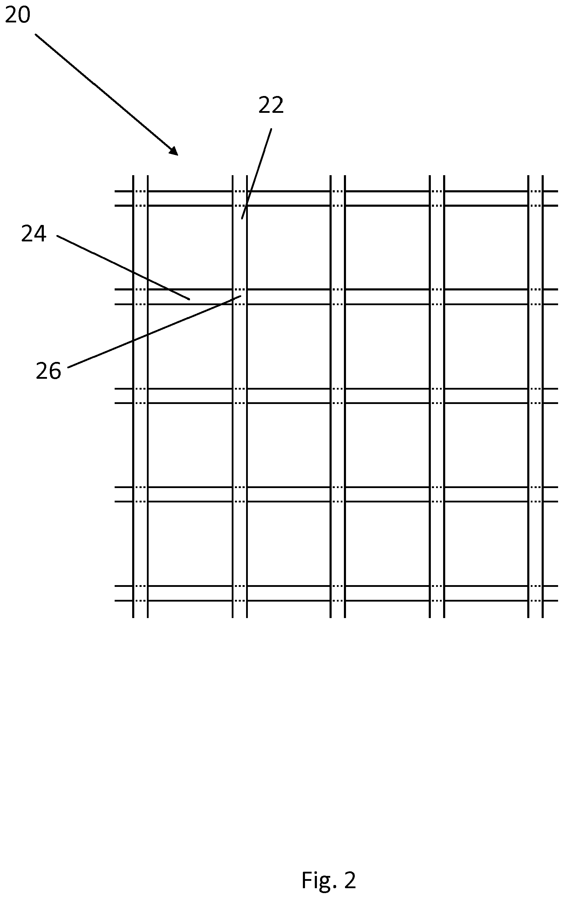

Alternatively, the tows may be bound by resin tack. This will now be described with reference to Figure 2.

In this Figure, the non-woven fabric 20 is formed from spaced tows in a weft direction 22 and spaced tows in a warp direction 24, wherein the weft tows and the warp tows are conjoined in the locations 26 in which the tows 22,24 are in contact with one another. The weft tows 22 are impregnated with a reinforcement resin whereas the warp tows 24 are unimpregnated. The tows are held in place relative to one another due to the tack of the reinforcement resin. Optionally, the impregnated tows may also be cured. This results in a fabric which is relatively stiff in one direction (warp direction) whilst being conformable to the mould in a weft direction.

This fabric may be used in the same way as the fabric 10 in lay-ups containing dry reinforcement or layers of prepreg reinforcement to prevent any imperfections from perpetuating themselves throughout a lay-up.

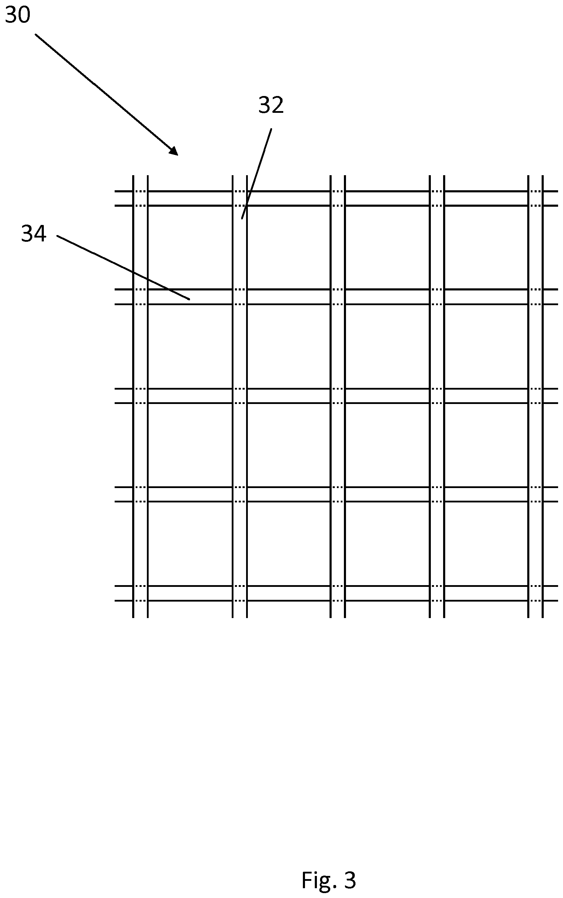

The non-woven fabric 10 may also be cured following impregnation with a reinforcement resin. This results in the non-woven fabric 30 of figure 3 in which the tows 32, 34 in the warp and weft direction are cured. Again this fabric 30 can be used in lay-ups containing dry reinforcement or layers of prepreg reinforcement to prevent any imperfections from perpetuating themselves throughout a lay-up.

## Claims

1. A non-woven fabric comprising spaced tows in a weft direction and spaced tows in a warp direction, wherein the weft tows and the warp tows are conjoined, and wherein the fabric comprises a binder for conjoining the tows.

2. A fabric according to claim 1, wherein the binder is a resin soluble material; preferably wherein the resin soluble material is in the form of a yarn.

3. A fabric according to any of the preceding claims, wherein the tows are conjoined by means of a resin; preferably wherein one of the weft tows or the warp tows is impregnated with resin.

4. A non-woven fabric according to any of the preceding claims in which the tows are resin impregnated and optionally subsequently cured.

5. A non-woven fabric according to claim 4 in which either the warp tows or the weft tows but not both are resin impregnated and optionally subsequently cured.

6. A non-woven fabric according to claim 5, wherein the tows in either the warp or weft direction are impregnated with cured resin and the tows in the other direction comprise an uncured resin or a powdered resin or are unimpregnated.

7. A non-woven fabric according to claim 3, wherein the fabric comprises resin at the points of intersection of the warp and weft tows to join together the warp and weft tows.

8. A non-woven fabric according to claim 7, wherein away from the points of intersection the warp and/or weft tows comprise uncured resin or are resin free.

9. A non-woven fabric according to any of the preceding claims in which the tows employed are of glass fibre, carbon fibre or aramid fibre.

10. A non-woven fabric according to any of the preceding claims in which the weft and warp tows are employed in adjacent layers of the non-woven fabric and are spaced apart to provide a grid; optionally wherein the spacing provides a gap of from 2mm to 15mm, preferably from 5mm to 10mm, between the tows.

11. The use of the non-woven fabric according to any of the preceding claims as an interlayer in a stack of curable fibre reinforced resin layers to improve the alignment and retention of the alignment of the fibre reinforced resin layers.

12. The use according to Claim 11 in which the fibre reinforced resin layers are prepregs or are formed by providing the fibrous material dry and providing the resin as a matrix for the fibrous material by impregnation within the mould.

13. A stack comprising several layers comprising fibrous reinforcement within a matrix of a curable thermosetting resin containing one or more layers of a non-woven fabric according to any of claims 1 to 11.

14. A stack according to claim 13 containing one layer of the non-woven fabric for from 6 to 20 layers of the fibrous reinforcement.

15. A stack according to claim 13 or claim 14 in which the curable thermosetting resin is an epoxy resin.

16. A composite article comprising a stack according to any of claims 13 to 15 in which the curable thermosetting resin is cured.

17. An article according to claim 16 comprising a wind turbine blade.

## Patentansprüche

1. Faservliesstoff, umfassend beabstandete Kabel in einer Schussrichtung und beabstandete Kabel in einer Kettenrichtung, wobei die Schusskabel und die Kettenkabel verbunden sind, und wobei der Stoff ein Bindemittel zum Verbinden der Kabel umfasst.

2. Stoff nach Anspruch 1, wobei das Bindemittel ein harzlösliches Material ist; wobei das harzlösliche Material vorzugsweise in Form eines Garns vorliegt.

3. Stoff nach einem der vorhergehenden Ansprüche, wobei die Kabel mittels eines Harzes verbunden sind; wobei vorzugsweise eines der Schusskabel oder der Kettenkabel mit Harz imprägniert ist.

4. Faservliesstoff nach einem der vorhergehenden Ansprüche, wobei die Kabel harzimprägniert und gegebenenfalls nachfolgend gehärtet worden sind.

5. Faservliesstoff nach Anspruch 4, wobei entweder die Kettenkabel oder die Schusskabel, jedoch nicht beide, harzimprägniert und gegebenenfalls nachfolgend gehärtet worden sind.

6. Faservliesstoff nach Anspruch 5, wobei die Kabel in entweder der Ketten- oder der Schussrichtung mit gehärtetem Harz imprägniert werden und die Kabel in der anderen Richtung ein ungehärtetes Harz oder ein pulverisiertes Harz umfassen oder unimprägniert sind.

7. Faservliesstoff nach Anspruch 3, wobei der Stoff an den Kreuzungspunkten von Ketten- und Schusskabeln Harz umfasst, um die Ketten- und Schusskabel miteinander zu verbinden.

8. Faservliesstoff nach Anspruch 7, wobei die Ketten- und/oder Schusskabel in Entfernung zu den Kreuzungspunkten ungehärtetes Harz umfassen oder harzfrei sind.

9. Faservliesstoff nach einem der vorhergehenden Ansprüche, wobei die verwendeten Kabel aus Glasfaser, Kohlefaser oder Aramidfaser sind.

10. Faservliesstoff nach einem der vorhergehenden Ansprüche, wobei die Schuss- und Kettenkabel in benachbarten Schichten des Faservliesstoffs verwendet werden und beabstandet sind, um ein Gitter bereitzustellen; wobei gegebenenfalls der Abstand eine Lücke von 2 mm bis 15 mm, vorzugsweise 5 mm bis 10 mm, zwischen den Kabeln bereitstellt.

11. Verwendung des Faservliesstoffs nach einem der vorhergehenden Ansprüche als Zwischenschicht in einem Stapel aus härtbaren faserverstärkten Harzschichten, um die Ausrichtung und den Beibehalt der Ausrichtung der faserverstärkten Harzschichten zu verbessern.

12. Verwendung nach Anspruch 11, wobei die faserverstärkten Harzschichten Prepregs sind oder gebildet werden, indem das faserige Material trocken bereitgestellt wird und das Harz als Matrix für das faserige Material durch Imprägnierung innerhalb der Form bereitgestellt wird.

13. Stapel, der mehrere Schichten umfasst, die faserige Verstärkung innerhalb einer Matrix eines härtbaren duroplastischen Harzes umfassen, die eine oder mehrere Schichten eines Faservliesstoffs nach einem der Ansprüche 1 bis 11 enthält.

14. Stapel nach Anspruch 13, der eine Schicht des Faservliesstoffs auf 6 bis 20 Schichten der faserigen Verstärkung enthält.

15. Stapel nach Anspruch 13 oder Anspruch 14, worin das härtbare duroplastische Harz ein Epoxyharz ist.

16. Verbundgegenstand, der einen Stapel nach einem der Ansprüche 13 bis 15 umfasst, worin das härtbare duroplastische Harz gehärtet ist.

17. Gegenstand nach Anspruch 16, der ein Windturbinenblatt umfasst.

## Revendications

1. Tissu non tissé comprenant des brins espacés dans une direction de trame et des brins espacées dans une direction de chaîne, dans lequel les brins de trame et les brins de chaîne sont liés, et le tissu comprenant un liant pour la liaison des brins.

2. Tissu selon la revendication 1, dans lequel le liant est un matériau soluble dans une résine ; préférablement dans lequel le matériau soluble dans une résine est sous la forme d'un fil.

3. Tissu selon l'une quelconque des revendications précédentes, dans lequel les brins sont liés au moyen d'une résine ; préférablement dans lequel soit les brins de trame, soit les brins de chaîne, sont imprégnés de résine.

4. Tissu non tissé selon l'une quelconque des revendications précédentes, dans lequel les brins sont imprégnés de résine et optionnellement durcis ensuite.

5. Tissu non tissé selon la revendication 4, dans lequel soit les brins de chaîne, soit les brins de trame, mais pas les deux, sont imprégnés de résine et optionnellement durcis ensuite.

6. Tissu non tissé selon la revendication 5, dans lequel les brins soit dans la direction de chaîne, soit dans la direction de trame, sont imprégnés d'une résine durcie, et les brins dans l'autre direction comprennent une résine non durcie ou une résine en poudre ou ne sont pas imprégnés.

7. Tissu non tissé selon la revendication 3, le tissu comprenant de la résine aux points d'intersection des brins de chaîne et des brins de trame pour unir les brins de chaîne et les brins de trame.

8. Tissu non tissé selon la revendication 7, dans lequel, à distance des points d'intersection, les brins de chaîne et/ou les brins de trame comprennent une résine non durcie ou sont exempts de résine.

9. Tissu non tissé selon l'une quelconque des revendications précédentes, dans lequel les brins utilisés sont en fibres de verre, en fibres de carbone ou en fibres d'aramide.

10. Tissu non tissé selon l'une quelconque des revendications précédentes, dans lequel les brins de trame et les brins de chaîne sont utilisés dans des couches adjacentes du tissu non tissé et sont espacés pour produire une grille ; optionnellement dans lequel l'espacement produit un écart de 2 mm à 15 mm, préférablement de 5 mm à 10 mm, entre les brins.

11. Utilisation du tissu non tissé selon l'une quelconque des revendications précédentes comme couche intermédiaire dans une superposition de couches de résine durcissable renforcée par des fibres pour améliorer l'alignement et la rétention de l'alignement des couches de résine renforcée par des fibres.

12. Utilisation selon la revendication 11, dans laquelle les couches de résine renforcée par des fibres sont des matériaux préimprégnés ou sont formées en apportant le matériau fibreux à l'état sec et en apportant la résine comme matrice pour le matériau fibreux par imprégnation dans le moule.

13. Superposition comprenant plusieurs couches comprenant un renforcement fibreux à l'intérieur d'une matrice qui se compose d'une résine durcissable thermodurcissable, contenant une ou plusieurs couches d'un tissu non tissé selon l'une quelconque des revendications 1 à 11.

14. Superposition selon la revendication 13, contenant une couche du tissu non tissé pour 6 à 20 couches du renforcement fibreux.

15. Superposition selon la revendication 13 ou la revendication 14, dans laquelle la résine durcissable thermodurcissable est une résine époxyde.

16. Article composite comprenant une superposition selon l'une quelconque des revendications 13 à 15 dans laquelle la résine durcissable thermodurcissable est durcie.

17. Article selon la revendication 16, comprenant une pale d'éolienne.
